# FASCICULE DE BREVET EUROPEEN

(11) **EP 3 063 809 B1**
(45) Date de publication et mention de la délivrance du brevet: **06.03.2019**
(21) Numéro de dépôt: 14792510.1
(22) Date de dépôt: 31.10.2014
(51) Int. Cl.: H01M 4/04, H01M 4/131, H01M 4/46

(54) **PROCÉDÉ POUR LA FABRICATION DE FILMS MINCES PAR VOIE HUMIDE**
NASSVERFAHREN ZUR HERSTELLUNG VON DÜNNSCHICHTEN
WET METHOD FOR THE PRODUCTION OF THIN FILMS

(30) Priorité: 31.10.2013 BE 201300742
(43) Date de publication de la demande: 07.09.2016
(73) Titulaire: Prayon S.A., 4480 Engis (BE); Université de Liège, 4031 Angleur (BE)
(72) Inventeur: LIQUET, Dimitri, B-4031 Angleur (BE); CALBERG, Cédric, B-4130 Esneux (BE); ESKENAZI, David, B-4020 Liège (BE); PAEZ, Carlos, 4610 Beyne-Heusay (BE); PIRARD, Jean-Paul, B-4032 Chênée (BE); HEINRICHS, Benoît, B-4000 Liège (BE); ALIÉ, Christelle, B-4000 Liège (BE)
(74) Mandataire: Connor, Marco Tom
(86) Numéro de dépôt international: PCT/EP2014/073444
(87) Numéro de publication internationale: WO 2015/063264

(56) Documents cités:
- G TING-KUO FEY ET AL: "Sol-gel synthesis of LixNi0.8Co0.2O2 via an oxalate route and its electrochemical performance as an intercalation material for lithium batteries", MATERIALS CHEMISTRY AND PHYSICS, vol. 79, no. 1, 1 mars 2003 (2003-03-01), pages 21-29, XP055126254, ISSN: 0254-0584, DOI: 10.1016/S0254-0584(02)00356-5 cité dans la demande
- TING-KUO FEY G ET AL: "Saturated linear dicarboxylic acids as chelating agents for the sol-gel synthesis of LiNi0.8Co0.2O2", MATERIALS CHEMISTRY AND PHYSICS, ELSEVIER SA, SWITZERLAND, TAIWAN, REPUBLIC OF CHINA, vol. 87, no. 2-3, 15 octobre 2004 (2004-10-15), pages 246-255, XP004532962, ISSN: 0254-0584, DOI: 10.1016/J.MATCHEMPHYS.2003.12.018 cité dans la demande
- HAO Y J ET AL: "Synthesis and characterization of spinel Li4Ti5O12 anode material by oxalic acid-assisted sol-gel method", JOURNAL OF POWER SOURCES, ELSEVIER SA, CH, vol. 158, no. 2, 25 août 2006 (2006-08-25) , pages 1358-1364, XP027938888, ISSN: 0378-7753 [extrait le 2006-08-25] cité dans la demande
- VAISHALI PATIL ET AL: "LiCoO2 thin film cathodes grown by sol-gel method", JOURNAL OF ELECTROCERAMICS, KLUWER ACADEMIC PUBLISHERS, BO, vol. 23, no. 2-4, 10 janvier 2008 (2008-01-10), pages 214-218, XP019749772, ISSN: 1573-8663 cité dans la demande

## Description

### Domaine de l'invention

L'invention se rapporte à la fabrication de films d'oxyde de métaux de transition par voie humide, par exemple par voie sol-gel. En particulier, l'invention se rapporte à la fabrication de films, de préférence minces, d'oxyde de métaux de transition lithié.

### État de la technique

L'utilisation de microbatteries, telles que les batteries Li-ion, comprenant des films minces d'oxydes métalliques connaît un essor important dans de nombreux domaines d'applications. Ces films minces sont généralement constitués d'oxyde de métaux de transition lithié, par exemple des oxydes de cobalt, de manganèse ou de nickel. Ces oxydes sont des matériaux de choix pour la préparation d'un matériau d'électrode grâce à leur forte capacité spécifique d'insertion et leur excellente cyclabilité.

Les films minces d'oxydes métalliques sont principalement préparés par dépôt physique en phase vapeur (PVD). Cette méthode consiste à vaporiser le matériau à basse pression et à le condenser sur le substrat. Deux autres techniques sont régulièrement employées pour former des films minces de métaux de transition : le dépôt laser pulsé (PLD) et la pulvérisation cathodique radiofréquence. Le dépôt par PLD est effectué par des impulsions laser envoyées sur une cible pour permettre l'évaporation du matériau. La pulvérisation cathodique radiofréquence consiste à créer un plasma d'argon dans une enceinte de dépôt où les ions Ar⁺ bombardent mécaniquement la cible du matériau pour le déposer sur le substrat. Une étape de recuit à très haute température du matériau formé est nécessaire pour favoriser la formation définitive du matériau. Cette étape de recuit à très haute température est incompatible avec l'intégration des microaccumulateurs sur un circuit électronique souple. La lenteur de ces procédés limite les capacités de production industrielle. De plus, la capacité massique de ce type de films minces chute fortement après quelques cycles de charge/décharge. Le dépôt chimique en phase vapeur (CVD - vaporisation des précurseurs de métaux de transition à haute température sur le substrat) est une alternative aux techniques précédentes mais ces procédés requièrent des températures plus élevées. En outre, les coûts liés aux investissements à l'exploitation de ces technologies sont très importants.

Afin de pallier les inconvénients des techniques de dépôt sous vide, des méthodes de préparation par voie humide ont été explorées. On connaît par exemple de Kim et al., Journal of Power Sources, 99, 2001, 34-40, la fabrication de films minces de LiCoO₂ par voie sol-gel. La fabrication consiste en la préparation d'une solution constituée d'une source de lithium et de cobalt, d'acide acétique et de 2-méthoxyéthanol. Le film formé a une épaisseur inférieure à 200 nm. Le film est recuit à une température supérieure à 600°C sous oxygène. La solution est ensuite déposée sur un substrat métallique par spin coating.

De nombreux documents divulguent des techniques de synthèses sol gel qui consistent en la préparation de poudres à partir de gel comme notamment les publications de Fey T.K.G. et al., Journal of Materials Chemistry and Physics, 2003, 79, 21-29 ; Fey T.K.G. et al., Journal of Materials Chemistry and Physics, 2004, 87, 246-255 ; Hao Y.J. et al., Journal of Power Sources, 2006, 158, 1358-1364. Ces documents décrivent la préparation de sols au départ de précurseurs dissouts dans des solvants avec des agents chélatants. Ces sols sont chauffés pour former un gel qui sera ensuite séché pour obtenir un solide qui est ensuite calciné et mis en oeuvre sous forme de poudre. Ces techniques ne présagent en rien de l'adhésion de ces sols sur des supports. On connaît notamment de Porthault et al., Journal of Power Sources, 2010, 195, 6262-6267, la préparation de LiCoO₂ par un procédé sol-gel. Les sols sont préparés en présence d'une source de lithium et de cobalt, d'éthylène glycol ou d'eau et d'acide acrylique. Des essais de synthèse de poudre et de dépôts en couche mince par spin coating sont réalisés. Le film obtenu présente une mauvaise adhérence sur un substrat Si/SiO₂/Pt. Un délaminage des films déposés a été observé et seules les poudres produites par le procédé sol-gel ont pu être analysées. Comme mentionné ci-dessus, cette publication démontre que des résultats obtenus et présentés sur base d'un solide sous forme de poudre ne permettent pas de prévoir le comportement de ce même solide lorsqu'il est mis en oeuvre sous la forme d'un film ou que ce même solide aura des propriétés d'adhérence suffisante pour former un film supporté sur des substrats de type SiO₂/Pt.

On connaît également par WO 02/091501 la préparation de films minces de LiCoO₂ par dip coating (par trempage). Les films de LiCoO₂ sont préparés à partir d'une solution obtenue en dissolvant l'acide citrique, l'acétate de lithium et l'acétate de cobalt hydraté dans l'éthylène glycol. Une bonne adhérence du film de LiCoO₂ sur le substrat est observée uniquement lorsque la rugosité du substrat est augmentée par un traitement de la surface de celui-ci.

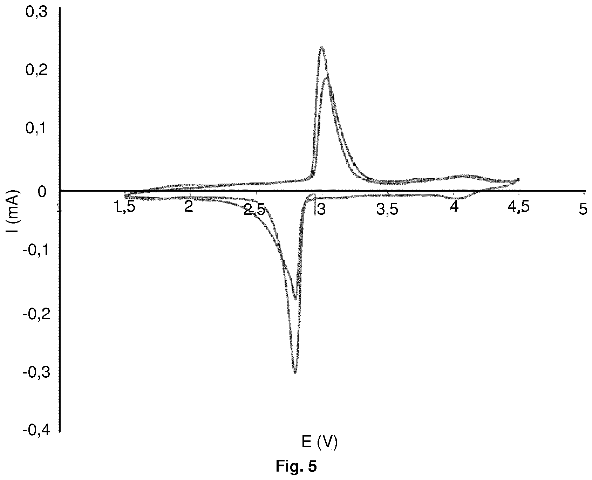

On connaît également de Patil et al., Journal of Electroceram, 2009, 23, 214-218, des dépôts sol-gel par spin coating où la préparation du sol met en oeuvre des précurseurs de lithium et de cobalt dans du méthanol avec une quantité non divulguée d'acide citrique. Ces dépôts bien qu'adhérant au substrat n'ont pas donné après calcination à 750°C des résultats de pureté satisfaisants, ceci étant notamment montré par les mesures de voltampérométrie cyclique (fig. 5 page 217). En outre, les propriétés électrochimiques des matériaux déposés ne correspondent pas aux exigences nécessaires dans les applications industrielles de type micro-batteries. En effet, la voltampérométrie cyclique du LiCoO₂ doit montrer la présence de trois pics correspondant à trois phénomènes d'oxydoréduction distincts situés à 3,95V, 4,06V et 4,18V. Les mesures divulguées dans ce document ne permettent de distinguer que le premier pic. En outre, la capacité d'insertion (fig. 6, page 217) chute très rapidement pour atteindre 80 mAh/g après 40 cycles.

On connaît également de Bhuwaneswari M.S., Journal of Sol-Gel Sciences & Technology, 2010, 56, 320-326, la préparation de films minces de LiCoPO₄ par voie sol-gel. Les films sont préparés en présence d'une source de lithium, de cobalt et de phosphate, d'éthylène glycol et d'acide citrique et déposés sur un substrat par dip coating. Les résultats présentés ne permettent pas aujourd'hui une exploitation industrielle du dépôt ainsi formé.

Les films minces préparés par voie sol-gel présentent ainsi régulièrement des problèmes d'adhérence sur les substrats utilisés. Des craquelures sur la surface du film sont également observées. La fabrication de films minces par voie sol-gel peut donc être améliorée.

### Résumé de l'invention

Un des buts de la présente invention est de fournir un procédé de fabrication de films d'oxyde de métaux de transition amélioré afin d'obtenir un film homogène sans craquelure, et présentant une bonne adhérence sur un substrat.

Selon un premier aspect, l'invention fournit un procédé de fabrication de films d'oxyde de métaux de transition de formule AₐM_{b}O_{d} dans laquelle
A est un métal alcalin, avantageusement A est choisi parmi le groupe consistant en Li, Na et K, et leur mélange, de préférence A est Li;
M est un métal ou un mélange de métaux choisi parmi les métaux de transition, avantageusement M est choisi parmi le groupe consistant en Co, Ni, Mn, Fe, Cu, Ti, Cr, V et Zn, et leurs mélanges;
O est l'oxygène ;
a, b et d sont des nombres réels supérieurs à 0 et sont choisis de manière à assurer l'électroneutralité ;
ledit procédé comprend les étapes de :
a) préparation d'une solution comprenant un ou plusieurs, de préférence deux ou plus que deux, précurseurs contenant un ou plusieurs des éléments A, M et O, un agent chélatant et un solvant organique polaire ayant une température d'ébullition à pression atmosphérique inférieure à 150°C,
b) maintien de ladite solution sous agitation pour former un sol,
c) mise en oeuvre dudit sol sous forme dudit film d'oxyde de métaux de transition, selon la revendication 1,
caractérisé en ce que
l'agent chélatant est choisi parmi les acides dicarboxyliques aliphatiques comprenant de 2 à 20 atomes de carbone, les sels ou les mélanges de ceux-ci, ou l'agent chélatant est un mélange entre au moins un acide dicarboxylique tel que défini ci-dessus et au moins un acide tricarboxylique aliphatique comprenant de 2 à 20 atomes de carbone, les sels ou les mélanges de ceux-ci, la proportion dudit au moins un acide tricarboxylique étant inférieure à 30% en mole sur base de la quantité totale en mole dudit au moins un acide dicarboxylique et dudit au moins un acide tricarboxylique dans ladite solution.

De préférence, le procédé concerne la fabrication de films minces d'oxyde de métaux de transition. Le terme « mince » tel qu'utilisé ici se rapporte à l'épaisseur moyenne dudit film d'oxyde de métaux de transition, ladite épaisseur moyenne étant inférieure à 250 µm. Le film peut être plat, en relief, en créneau ou en escalier.

De préférence, le présent procédé se rapporte à la fabrication de films d'oxyde de métaux de transition, avantageusement d'oxyde de métaux de transition lithié, c'est-à-dire comprenant du lithium.

Un film d'oxyde de métaux de transition préparé selon la présente invention peut être utilisé comme matériau d'électrode, de préférence comme matériau d'électrode dans une microbatterie avec une capacité d'insertion supérieure ou égale à 60% de la capacité d'insertion théorique réversible, avantageusement supérieure ou égale à 70%, de préférence supérieure ou égale à 80%, en particulier supérieure ou égale à 90%. De préférence, la capacité massique dudit film après 20 cycles est au moins supérieure ou égale à 70% de la capacité massique théorique. De préférence après 100 cycles, la capacité massique est au moins supérieure ou égale à 65% de la capacité massique théorique.

### Brève description des figures

La figure 1 représente la courbe de cyclage électrogalvanostatique d'un film de LiCoO₂ préparé selon un mode de réalisation particulier de la présente invention.
La figure 2 représente le diagramme de diffraction des rayons X (DRX) d'un film de LiCoO₂ préparé selon un mode de réalisation particulier de la présente invention.
Les figures 3a et 3b représentent respectivement la voltampérométrie cyclique et un cyclage voltamétrique d'un film de LiCoO₂ préparé selon un mode de réalisation particulier de l'invention illustrant d'une part, l'évolution de la capacité spécifique de l'électrode en fonction du nombre de cycles de charge et de décharge et d'autre part l'évolution du courant en fonction du potentiel.
La figure 4 représente les capacités de charge et de décharge d'un film de LiCoO₂ préparé selon un mode de réalisation particulier de l'invention en fonction du nombre de cycles de charge et de décharge subis par l'électrode.
La figure 5 représente la voltampérométrie cyclique d'un film de Li₄Mn₅O₁₂ préparé selon un mode de réalisation particulier de la présente invention.

### Description détaillée de l'invention

Selon un premier aspect, la présente invention se rapporte à un procédé de fabrication de films d'oxyde de métaux de transition de formule AₐM_{b}O_{d} dans laquelle
A est un métal alcalin, de préférence A est choisi parmi le groupe consistant en Li, Na et K, et leur mélange, en particulier A est Li ;
M est un métal ou un mélange de métaux choisi parmi les métaux de transition, avantageusement M est un métal ou un mélange de métaux de transition choisis parmi les éléments des colonnes 3 à 12 du tableau périodique, de préférence M est choisi parmi le groupe consistant en Co, Ni, Mn, Fe, Cu, Ti, Cr, V et Zn, et leurs mélanges ;
O est l'oxygène,
a, b et d sont des nombres réels supérieurs à 0 et sont choisis de manière à assurer l'électroneutralité.
Ledit procédé comprend en outre les étapes suivantes :
a) préparation d'une solution comprenant un ou plusieurs précurseurs, de préférence deux ou plus de deux, précurseurs contenant un ou plusieurs des éléments A, M et O, un agent chélatant et un solvant organique polaire ayant une température d'ébullition à pression atmosphérique inférieure à 150°C,
b) maintien de ladite solution sous agitation, de préférence à température ambiante, pour former un sol,
c) mise en oeuvre dudit sol sous forme dudit film d'oxyde de métaux de transition, selon la revendication 1,
caractérisé en ce que
l'agent chélatant est choisi parmi les acides dicarboxyliques aliphatiques comprenant de 2 à 20 atomes de carbone, les sels ou les mélanges de ceux-ci, ou l'agent chélatant est un mélange entre au moins un acide dicarboxylique et au moins un acide tricarboxylique, la proportion dudit au moins un acide tricarboxylique étant inférieure à 30% en mole sur base de la quantité totale en mole dudit au moins acide dicarboxylique et dudit au moins un acide tricarboxylique dans ladite solution. Ledit au moins un acide tricarboxylique est choisi parmi les acides tricarboxyliques aliphatiques comprenant de 2 à 20 atomes de carbone, les sels ou les mélanges de ceux-ci.

De manière surprenante, il a été observé que l'utilisation spécifique et combinée d'un agent chélatant et d'un solvant organique polaire tels que décrits dans la présente invention permet de faciliter l'adhérence du film préparé selon la présente invention sur un substrat. De plus, l'utilisation d'un agent chélatant permet de limiter considérablement, ou d'éviter, la présence de craquelures, de défaut ou d'aspérités à la surface dudit film préparé selon la présente invention. En outre, le solvant organique polaire ayant un point d'ébullition bas, i.e. inférieur à 150°C, de préférence inférieur à 100°C, assure la bonne mouillabilité du substrat par ledit sol formé à l'étape b). La surface dudit film préparé selon la présente invention peut posséder une rugosité faible, avantageusement inférieure à 2000 nm, de préférence inférieure à 1000 nm, en particulier inférieure à 500 nm. De préférence, ledit film d'oxyde de métaux de transition peut être déposé sur un substrat. Ainsi, lorsque ledit film d'oxyde de métaux de transition peut être déposé sur un substrat, la rugosité de la surface dudit film inclut la rugosité issue de la surface dudit substrat. Lorsque ledit film d'oxyde de métaux de transition est déposé sur un substrat, la surface dudit film préparé selon la présente invention peut posséder une rugosité faible, avantageusement inférieure à 2500 nm, de préférence inférieure à 1200 nm, en particulier inférieure à 520 nm. En particulier, le procédé selon l'invention permet d'assurer la formation dudit film d'oxyde de métaux de transition et son adhérence sur des substrats de faible rugosité, en particulier des substrats ayant une surface présentant une rugosité Ra inférieure à 500 nm.

Selon un mode de réalisation préféré, ladite solution préparée à l'étape a) comprend également un agent stabilisant choisi parmi le groupe consistant en l'eau ou un acide carboxylique comprenant de 1 à 20 atomes de carbone ou un sel de celui-ci ou un mélange de ceux-ci. L'agent stabilisant est différent de l'agent chélatant. Ledit acide carboxylique est donc de préférence un monoacide, de préférence un monoacide aliphatique. L'acide carboxylique peut être l'acide méthanoïque, l'acide acétique, l'acide propanoïque, l'acide butanoïque, l'acide pentanoïque, l'acide hexanoïque, l'acide octanoïque, l'acide nonanoïque et l'acide décanoïque. En particulier, l'agent stabilisant peut être l'eau, l'acide acétique, l'acide propanoïque, l'acide butanoïque, l'acide pentanoïque. L'agent stabilisant permet d'éviter la précipitation des ions alcalins et/ou métalliques provenant desdits un ou plusieurs précurseurs utilisés à l'étape a) du présent procédé. L'agent stabilisant permet ainsi de contrôler et de maintenir la qualité de la solution entre sa préparation et sa mise en oeuvre (étapes b) et c) du présent procédé).

La proportion d'agent stabilisant dans la solution préparée à l'étape a) peut être comprise entre 0,1 et 30%, de préférence entre 1 et 20% de la quantité en poids de solvant.

De préférence, l'agent chélatant est choisi parmi les diacides carboxyliques aliphatiques comprenant de 2 à 20 atomes de carbone, avantageusement de 2 à 12 atomes de carbone, de préférence de 2 à 10 atomes de carbone, leurs sels ou leurs mélanges. En particulier, l'agent chélatant peut être l'acide oxalique, malonique, succinique, glutarique, adipique, maléique, fumarique, pimélique, subérique, azélaïque, sébacique, glutaconique et itaconique, les sels et les mélanges de ceux-ci. Alternativement, l'agent chélatant peut être un mélange entre au moins un acide dicarboxylique tel que défini ci-dessus et au moins un acide tricarboxylique, la proportion dudit au moins un acide tricarboxylique étant inférieure à 30% en mole sur base de la quantité totale en mole dudit au moins un acide dicarboxylique et dudit au moins un acide tricarboxylique dans ladite solution. Ledit au moins un acide tricarboxylique est choisi parmi les acides tricarboxyliques aliphatiques comprenant de 2 à 20 atomes de carbone, avantageusement de 2 à 12 atomes de carbone, de préférence de 2 à 10 atomes de carbone, leurs sels ou leurs mélanges. Avantageusement, la proportion dudit au moins un acide tricarboxylique peut être inférieure à 25% en mole, de préférence inférieure à 20% en mole, plus particulièrement inférieure à 15% en mole, en particulier inférieur à 10% en mole. De préférence, l'acide tricarboxylique peut être l'acide citrique, l'acide isocitrique, l'acide aconitique, l'acide propane-1,2,3-tricarboxylique ou l'acide oxalosuccinique, un sel ou un mélange de ceux-ci ; en particulier l'acide tricarboxylique est l'acide citrique. Le terme « au moins un » tel qu'utilisé ici se réfère à un ou plusieurs.

De préférence, l'agent chélatant est choisi parmi l'acide oxalique, l'acide succinique ou l'acide adipique, un sel de ceux-ci, les mélanges de ceux-ci et les mélanges de ceux-ci avec l'acide citrique. En particulier, l'agent chélatant est l'acide adipique ou un sel de celui-ci. Alternativement, l'agent chélatant peut être un mélange d'acide adipique et d'acide citrique ou un sel de ceux-ci dans les proportions indiquées ci-dessus. L'utilisation de ces acides seuls ou en combinaison permet de former ledit sol sans avoir recours à une étape de chauffage de la solution ou à une atmosphère contrôlée. Le procédé de fabrication dudit film d'oxyde de métaux de transition est ainsi optimisé. De plus, ledit film ainsi préparé présente une bonne adhérence sur un substrat, de préférence un substrat métallique et/ou compatible avec les applications envisagées.

La proportion d'agent chélatant dans la solution préparée à l'étape a) peut être comprise entre 0,1 et 5 équivalents, avantageusement entre 0,5 et 3 équivalents, de préférence entre 0,8 et 1,2 équivalents, en particulier 1 équivalent par rapport à la somme des quantités exprimées en mole du ou des précurseurs de A et de M utilisés dans la solution préparée à l'étape a) divisée par le nombre de fonctions acides de l'agent chélatant.

Comme mentionné ci-dessus, le solvant organique polaire a une température d'ébullition à pression atmosphérique inférieure à 150°C, de préférence inférieure à 100°C. Le terme « solvant organique » se réfère à un composé organique ou un mélange comprenant au moins 80% en poids, de préférence 90% en poids, en particulier 99% en poids d'un composé organique. Ledit composé organique comprend au moins un atome de carbone lié à un atome d'hydrogène. Un solvant organique est dit « polaire » si le composé organique présente un moment dipolaire supérieur à 0,5 debye. Le solvant organique polaire est de préférence choisi pour sa capacité à solubiliser l'agent chélatant et l'agent stabilisant ainsi que les précurseurs. Le solvant est choisi en fonction des précurseurs à solubiliser. Avantageusement, le solvant organique polaire peut être choisi parmi le méthanol, éthanol, propan-1-ol, isopropanol, butanol, pentanol, acétone, butanone, tétrahydrofurane, acétonitrile, éther diéthylique, dichlorométhane, chloroforme, dioxane, 2-methoxyethanol et l'acétate d'éthyle. De préférence, le solvant organique polaire peut être le méthanol, l'éthanol, l'isopropanol, le butanol ou le tétrahydrofurane.

Lesdits un ou plusieurs précurseurs contenant un ou plusieurs des éléments A, M et O peuvent être des sels, des hydroxydes, des oxydes ou des complexes de métaux de transition; des sels, des hydroxydes, des oxydes ou des complexes de métaux alcalins. Le terme « tableau périodique » se rapporte au tableau périodique des éléments. Le terme « un ou plusieurs » tel qu'utilisé ici se réfère à 1, au moins 1, plus que 1, ou 1, 2 ou plus que deux ; ou 1, deux ou plusieurs, de préférence deux ou plusieurs. Le terme métaux de transition se réfère de préférence aux éléments des colonnes 3 à 12 du tableau périodique.

Avantageusement, lesdits un ou plusieurs, de préférence deux ou plus que deux, précurseurs contenant un ou plusieurs des éléments A, M et O sont sélectionnés parmi le groupe consistant en les sels ou les hydroxydes de lithium, sodium, potassium, cobalt, nickel, manganèse, fer, cuivre, titane, chrome, vanadium et zinc et leurs mélanges. Les sels de lithium, sodium, potassium, cobalt, nickel, manganèse, fer, cuivre, titane, chrome, vanadium, zinc peuvent être des sels de nitrate, d'acétate, d'oxalate, de citrate, de succinate, de carbonate ou d'adipate. Les proportions entre chacun des précurseurs peuvent être déterminées de manière à obtenir l'oxyde de métal de transition désiré.

Lesdits un ou plusieurs précurseurs, de préférence deux ou plus que deux, peuvent comprendre un premier précurseur choisi parmi un sel ou un hydroxyde de lithium, de sodium ou leur mélange, et un second précurseur choisi parmi un sel ou un hydroxyde de cobalt, de nickel, de titane ou de manganèse, ou leur mélange. Le rapport molaire entre ledit premier précurseur et ledit second précurseur peut être compris entre 10 : 1 et 1 : 10, avantageusement entre 2 : 1 et 1 : 2, en particulier, le rapport molaire est de 1.

En particulier, lesdits un ou plusieurs précurseurs, de préférence deux ou plus que deux précurseurs, comprennent un sel ou un hydroxyde de lithium, de préférence un sel d'acétate ou de nitrate de lithium, et un sel de cobalt, de nickel, de titane, de chrome et/ou de manganèse, de préférence un sel d'acétate, d'adipate, d'oxalate, de succinate ou de nitrate de cobalt, de nickel, de chrome de titane et/ou de manganèse. Selon un mode de réalisation préféré, lesdits un ou plusieurs précurseurs, de préférence deux ou plus que deux précurseurs, comprennent l'acétate de lithium et l'acétate ou le nitrate de cobalt ou de manganèse. Alternativement, un desdits un ou plusieurs précurseurs, de préférence deux ou plus que deux précurseurs, peut être un sel d'adipate, d'oxalate ou de succinate. L'utilisation d'un sel d'adipate, d'oxalate ou de succinate comme précurseur permet de fournir à la fois une partie de la quantité de l'agent chélatant et un ou plusieurs des éléments A ou M nécessaire à la préparation de la solution selon l'étape a) du présent procédé. Par exemple, l'adipate de cobalt peut être utilisé.

Ladite solution préparée à l'étape a) peut également contenir des particules conductrices de l'électricité telles que des particules d'argent, d'or, d'indium, et de platine, des fibres de carbone, des nanoparticules de carbone ou des nanotubes de carbone.

Selon un mode de réalisation préféré, l'étape b) est réalisée dans des conditions de température et de pression ambiantes. L'étape b) peut être réalisée également sous atmosphère ambiante, c'est-à-dire sous une atmosphère ni contrôlée ni modifiée par rapport à l'air ambiant.

Selon un mode de réalisation préféré, le sol formé à l'étape b) a une viscosité inférieure à 100 centipoises (0,1 Pa.s), de préférence inférieure à 50 centipoises (0,05 Pa.s), en particulier inférieure à 10 centipoises (0,01 Pa.s). L'obtention d'un sol ayant la viscosité mentionnée ci-dessus permet d'améliorer la préparation dudit film d'oxyde de métaux de transition et son dépôt sur le substrat. De préférence, le sol peut présenter une bonne homogénéité, en particulier lorsque la solution de l'étape a) ne contient pas de particules conductrices de l'électricité telles que définies ci-dessus, c'est-à-dire lorsque aucunes particules conductrices de l'électricité telles que définies ci-dessus n'est ajoutée lors de la préparation de la solution a). En particulier, le sol selon la présente invention est considéré comme homogène s'il ne présente pas de particules ayant une dimension supérieure à 2 µm, avantageusement supérieure à 1 µm, de préférence supérieure à 0,5 µm, en particulier supérieure à 0,2 µm.

La mise en oeuvre du sol sous forme dudit film d'oxyde de métaux de transition comprend les étapes de :
c') dépôt d'une ou plusieurs couches dudit sol sur un substrat, et
c") calcination desdites une ou plusieurs couches formées à l'étape c') pour préparer ledit film d'oxyde de métaux de transition.
Lorsque plusieurs couches dudit sol sont formées sur un substrat, la calcination réalisée à l'étape c") peut être effectuée après le dépôt de chacune des couches dudit sol ou après le dépôt de plusieurs couches dudit sol.

De préférence, le dépôt d'une ou plusieurs couches dudit sol sur un substrat est réalisé sur un substrat ayant une température apte à permettre l'évaporation dudit solvant organique polaire, avantageusement une température proche de la température d'ébullition dudit solvant organique polaire. Le terme « proche » tel qu'utilisé ici correspond à une gamme de température dont la limite inférieure est égale à 30°C en dessous de la température d'ébullition dudit solvant organique polaire et dont la limite supérieure est égale à 10°C au-dessus de la température d'ébullition dudit solvant organique polaire. Ainsi, le solvant organique polaire présent dans le sol est au moins partiellement évaporé avant le dépôt d'une autre couche dudit sol. La qualité dudit film résultant est améliorée.

De préférence, ledit substrat est un substrat métallique. En particulier, ledit substrat peut être un substrat conducteur de l'électricité. Le substrat peut comprendre du carbone, du platine, de l'or, de l'inox, du platine sur SiO₂, de l'ITO (Indium Tin Oxide), du platine sur une tranche de silice (également dénommée silicon wafer) ou des alliages métalliques comprenant au moins deux des éléments choisis parmi le nickel, le chrome et le fer. Lesdits alliages métalliques peuvent également comprendre d'autres éléments choisis parmi le molybdène, le niobium, le cobalt, le manganèse, le cuivre, l'aluminium, le titane, le silicium, le carbone, le soufre, le phosphore ou le bore. A titre d'exemple, les alliages métalliques peuvent être Ni₆₁Cr₂₂Mo₉Fe₅, Ni₅₃Cr₁₉Fe₁₉Nb₅Mo₃, Ni₇₂Cr₁₆Fe₈, Ni₅₇Cr₂₂Co₁₂Mo₉, Ni_{32,5}Cr₂₁Fe ou Ni₇₄Cr₁₅Fe₇Ti_{2,5}Al_{0,7}Nb_{0,95}, ceux-ci peuvent en outre contenir des traces ou des faibles teneurs dans l'un des composés suivants : le molybdène, le niobium, le cobalt, le manganèse, le cuivre, l'aluminium, le titane, le silicium, le carbone, le soufre, le phosphore ou le bore. Par exemple, lesdits alliages métalliques peuvent être des alliages de type Inconel®.

Le dépôt dudit sol sur le substrat (étape c') peut être réalisé par spin coating (i.e. dépôt par centrifugation), dip coating (i.e. dépôt par trempage) ou spray coating (i.e. dépôt par aérosol) ou slide coating (i.e. dépôt par glissement) ou screen printing (i.e. dépôt par impression sérigraphique) ou inkjet printing (i.e. dépôt par impression jet-d'encre) ou roll coating (i.e. dépôt par enducteur à rouleau). De préférence, lorsque la viscosité du sol formé à l'étape b) a une viscosité inférieure à 100 centipoises (0,1 Pa.s), de préférence inférieure à 50 centipoises (0,05 Pa.s), en particulier inférieure à 10 centipoises (0,01 Pa.s), l'étape c) ou c') est réalisée par spray coating. De préférence, lorsque la mise en oeuvre dudit sol sous forme dudit film d'oxyde de métaux de transition sur le substrat (étape c) est réalisé par spray coating, la présente invention permet d'éviter les coulures qui sont notamment néfastes dans le cadre de dépôt par masque en terme de qualité de produit.

Le substrat sur lequel le sol est déposé pour former ledit film d'oxyde de métaux de transition peut être lisse ou présenter une rugosité faible. Le présent procédé est particulièrement efficace pour former ou déposer un film d'oxyde de métaux de transition sur un substrat lisse ou faiblement rugueux. Le film ainsi formé présente une bonne adhérence sur le substrat contrairement aux procédés par voie humide de l'art antérieur avec lesquels le film déposé sur le substrat métallique présente une adhérence faible sur un substrat lisse ou faiblement rugueux. Dans un mode de réalisation préféré, le substrat, de préférence métallique, peut présenter une rugosité Ra inférieure à 500 nm, de préférence inférieure à 200 nm et de préférence inférieure à 20 nm.

Le film d'oxyde de métaux de transition préparé selon la présente invention peut avoir une structure monocouche ou multicouches suivant le nombre de couches déposées à l'étape c'). Le film d'oxyde de métaux de transition ayant une structure multicouche peut être préparé en répétant l'étape c') du présent procédé. Chaque étape c') peut être suivie de la mise en oeuvre de l'étape c") de calcination de la couche formée. Chaque couche de la structure multicouche peut être indépendante l'une de l'autre. Ainsi, chaque couche peut avoir la même constitution, c'est-à-dire être constituée du ou des mêmes oxydes de métaux de transition de formule AₐM_{b}O_{d} telle que décrite dans la présente invention. Par exemple, un film multicouche de métaux de transition tel que LiCoO₂ pourrait être formé par des dépôts successifs sur le substrat, c'est-à-dire en répétant une ou plusieurs fois l'étape c') jusqu'à l'obtention de la structure multicouche désirée.

Alternativement, un film de structure multicouche peut être formé par des dépôts successifs d'une ou plusieurs couches de sols différents. Chaque sol peut être indépendamment préparé à partir d'une solution comprenant un agent chélatant et/ou un solvant organique polaire différent. De préférence, lesdits un ou plusieurs précurseurs, de préférence deux ou plus que deux précurseurs, contenant un ou plusieurs éléments A, M et O sont identiques dans chacun des sols préparés. Ledit film multicouche peut être préparé en répétant l'étape c) ou c') à partir des différents sols préparés jusqu'à l'obtention de la structure multicouche désirée.

Alternativement, un film de structure multicouche peut être formé par des dépôts successifs d'une ou plusieurs couches de sols différents et préparés à partir d'une solution comprenant desdits un ou plusieurs précurseurs contenant un ou plusieurs éléments A, M et O différents et optionnellement d'un agent chélatant et/ou d'un solvant organique polaire différent. Ledit film multicouche peut être préparé en répétant les étapes a) à c) jusqu'à l'obtention de la structure multicouche désirée. Par exemple, une première couche pourrait comprendre du LiCoO₂; des couches supplémentaires, déposées préalablement ou ultérieurement à cette première couche sur le substrat, pourraient indifféremment comprendre, par exemple, du LiNi_{0.5}Mn_{1.5}O₄, LiCr_{0.5}Mn_{1.5}O₄, LiCo_{0.5}Mn_{1.5}O₄, LiCoMnO₄, LiNi_{0.5}Mn_{0.5}O₂, LiNi_{1/3}Mn_{1/3}Co_{1/3}O₂, LiNi_{0.8}Co_{0.2}O₂, LiNi_{0.5}Mn_{1.5-z}Ti_{z}O₄ où z est un nombre entre 0 et 1,5, LiMn₂O₄, LiMnO₂, Li₄Mn₅O₁₂, LiNiO₂, Li₄Mn₅O₂ ou Li₄Ti₅O₁₂.

Le film d'oxyde de métaux de transition ayant une structure multicouche peut comprendre entre 2 et 200 couches, de préférence entre 2 et 100 couches. Chaque couche peut avoir une épaisseur comprise entre 0,01 et 2,5 µm indépendamment les unes des autres. Chaque dépôt d'une ou plusieurs couches dudit sol sur un substrat peut être effectué par spray coating ou dip coating, de préférence spray coating.

Le film d'oxyde de métaux de transition peut avoir une épaisseur moyenne comprise entre 0,01 µm et 250 µm, de préférence entre 0,1 et 50 µm, de préférence entre 1 et 30, de préférence entre 0,5 et 10 µm.

De préférence, un traitement thermique pour sécher une ou plusieurs desdites couches déposées à l'étape c') peut être effectué. Ce traitement thermique peut être réalisé chaque fois qu'une couche est déposée, i.e. chaque fois que l'étape c') est réalisée, ou après plusieurs dépôts successifs de couches (après plusieurs répétitions de l'étape c')), ou lorsque le film formé a une épaisseur comprise entre 1 et 2,5 µm. Le traitement thermique est effectué à une température inférieure à 250°C et avantageusement inférieure à 150°C et de préférence inférieure à 70°C. Le traitement thermique peut être effectué à pression atmosphérique ou sous vide. Le traitement thermique permet d'évaporer le solvant organique polaire utilisé dans le présent procédé.

Ladite calcination (étape c") du présent procédé est réalisée à une température de calcination comprise entre 250°C et 800°C, avantageusement entre 250°C et 650°C, de préférence entre 300 °C et 580 °C, et en particulier entre 350 °C et 550°C. L'étape de calcination peut être effectuée chaque fois qu'une couche dudit sol est déposée, i.e. chaque fois que l'étape c') est réalisée, ou après plusieurs dépôts successifs de couches. Lesdites une ou plusieurs couches sont maintenues à la température de calcination pendant une durée comprise entre 30 secondes et 1 heure, avantageusement entre 5 minutes et 45 minutes, de préférence entre 5 et 30 minutes. L'étape c") de calcination permet l'élimination des composés organiques et l'obtention du film d'oxyde de métaux recherché.

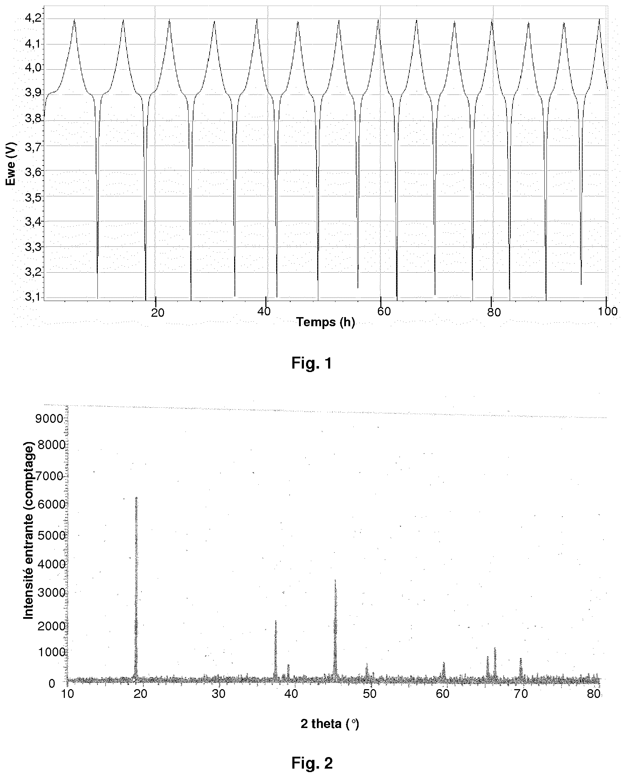

Le présent procédé peut comprendre en outre une étape d) de recuit dudit film d'oxyde de métaux de transition à une température de recuit comprise entre 300 °C et 700 °C, et en particulier entre 350 °C et 550 °C. De préférence, à l'étape d), ledit film d'oxyde de métaux de transition est maintenu à la température de recuit pendant une durée comprise entre 30 minutes et 12 heures, de préférence entre 1 heure et 10 heures. Ce recuit peut favoriser une formation plus complète d'une forme cristallographique particulière de l'oxyde de métaux de transition. La forme cristallographique particulière est celle qui permet audit film d'oxyde de métaux de transition selon la présente invention d'avoir une capacité massique telle que mentionnée dans la présente demande. Par exemple, la figure 2 représente le diagramme de diffraction des rayons X (DRX) d'un film de LiCoO₂ dont le procédé de préparation contient une étape de recuit effectuée à 700°C pendant 3 heures.

Le film d'oxyde de métaux de transition de formule AₐM_{b}O_{d} telle que définie ci-dessus et obtenu par les étapes a) à c), ou a) à c") ou a) à d), du présent procédé peut être choisi parmi le groupe consistant en LiCoO₂, LiMnO₂, LiNi_{0.5}Mn_{1.5}O₄, LiCr_{0.5}Mn_{1.5}O₄, LiCo_{0.5}Mn_{1.5}O₄, LiCoMnO₄, LiNi_{0.5}Mn_{0.5}O₂, LiNi_{1/3}Mn_{1/3}Co_{1/3}O₂, LiNi_{0.8}Co_{0.2}O₂, LiNi_{0.5}Mn_{1.5-z}Ti_{z}O₄ où z est un nombre entre 0 et 1,5, LiMn₂O₄, Li₄Mn₅O₁₂, LiNiO₂, et Li₄Ti₅O₁₂. Avantageusement, le film d'oxyde de métaux de transition de formule AₐM_{b}O_{d} telle que définie ci-dessus peut être LiCoO₂, LiMnO₂, LiNi_{0.5}Mn_{1.5}O₄, LiCr_{0.5}Mn_{1.5}O₄, LiCo_{0.5}Mn_{1.5}O₄, LiCoMnO₄, LiNi_{0.5}Mn_{0.5}O₂, LiNi_{1/3}Mn_{1/3}Co_{1/3}O₂, LiNi_{0.8}Co_{0.2}O₂, LiMn₂O₄, Li₄Mn₅O₁₂, LiNiO₂, Li₄Ti₅O₁₂; de préférence LiCoO₂, LiMnO₂, LiMn₂O₄, Li₄Mn₅O₁₂, LiNiO₂ ou Li₄Ti₅O₁₂.

Le procédé selon l'invention permet de déposer un film d'oxyde de métaux de transition tel que la capacité massique du matériau est d'au moins 60%, de la capacité spécifique réversible théorique de celui-ci, avantageusement supérieure ou égale à 70%, de préférence supérieure ou égale à 80%, et en particulier supérieure ou égale à 90%. Dans le cas particulier d'un film de LiCoO₂, la capacité massique théorique est supérieure à 90 mA.h/g, avantageusement supérieure à 100 mA.h/g et de préférence comprise entre 100 et 137 mA.h/g ; la capacité massique théorique est déterminée au premier cycle de décharge. De préférence, la capacité massique dudit film d'oxyde de métaux de transition après 20 cycles est au moins supérieure ou égale à 70% de la capacité massique théorique. De préférence, la capacité massique dudit film d'oxyde de métaux de transition après 100 cycles est au moins supérieure ou égale à 65% de la capacité massique théorique mesurée à un régime de C/10. La capacité spécifique réversible théorique est communément admise comme étant la moitié de la quantité théorique d'ions qui peuvent être insérés ou extraits dans un gramme de matériau d'électrode. Dans le cas du LiCoO₂, la capacité spécifique réversible théorique est de 137 mAh/g.

Selon un second aspect de l'invention, un sol selon la revendication 18 est fourni. Ledit sol comprend un ou plusieurs précurseurs, de préférence deux ou plus que deux précurseurs, tels que définis dans la présente invention, un agent chélatant choisi parmi les di- ou tri-acides carboxyliques aliphatiques comprenant de 2 à 20 atomes de carbone, les sels ou les mélanges de ceux-ci, et un solvant organique polaire ayant une température d'ébullition à pression atmosphérique inférieure à 150°C.

Ainsi, ledit sol peut comprendre :
- un ou plusieurs précurseurs, de préférence deux ou plus que deux précurseurs, choisi parmi un sel ou un hydroxyde de lithium, sodium, potassium, cobalt, nickel, manganèse, fer, cuivre, titane, chrome, vanadium, zinc, et leurs mélanges ;
- un agent chélatant choisi parmi les acides dicarboxyliques aliphatiques comprenant de 2 à 20 atomes de carbone, les sels ou les mélanges de ceux-ci ; ou l'agent chélatant est un mélange entre au moins un acide dicarboxylique tel que défini ci-dessus et au moins un acide tricarboxylique tel que défini ci-dessus, la proportion dudit au moins un acide tricarboxylique étant inférieure à 30% en mole sur base de la quantité totale en mole dudit au moins un acide dicarboxylique et dudit au moins un acide tricarboxylique dans ledit sol ; et
- un solvant organique polaire ayant une température d'ébullition à pression atmosphérique inférieure à 150 °C.

Avantageusement, lorsque l'agent chélatant est choisi parmi les acides dicarboxyliques, celui-ci peut être l'acide oxalique, malonique, succinique, glutarique, adipique, maléique, fumarique, pimélique, subérique, azélaïque, sébacique, glutaconique et itaconique, les sels et les mélanges de ceux-ci. De préférence, l'agent chélatant est l'acide adipique, l'acide succinique, l'acide oxalique ou un sel de ceux-ci ou les mélanges de ceux-ci. Alternativement, lorsque l'agent chélatant est un mélange entre au moins un acide dicarboxylique et au moins un acide tricarboxylique, ledit acide dicarboxylique est choisi parmi l'acide oxalique, malonique, succinique, glutarique, adipique, maléique, fumarique, pimélique, subérique, azélaïque, sébacique, glutaconique et itaconique, les sels et les mélanges de ceux-ci. De préférence, l'acide tricarboxylique peut être l'acide citrique, l'acide isocitrique, l'acide aconitique, l'acide propane-1,2,3-tricarboxylique ou l'acide oxalosuccinique ; en particulier l'acide tricarboxylique est l'acide citrique. De préférence, l'agent chélatant peut être un mélange entre au moins un acide dicarboxylique et l'acide citrique ; en particulier l'agent chélatant peut être un mélange entre au moins un acide dicarboxylique choisi parmi l'acide adipique, l'acide succinique, l'acide oxalique ou un sel de ceux-ci ; et l'acide citrique. Dans de tels mélanges, la proportion d'acide tricarboxylique, de préférence l'acide citrique, est telle que mentionnée ci-dessus à l'égard du procédé.

En particulier, ledit sol comprend
- un sel ou un hydroxyde de lithium ou de sodium, ou leur mélange,
- un sel ou un hydroxyde de cobalt, de nickel, de titane, de chrome ou de manganèse, ou leur mélange,
- l'acide adipique ou l'acide succinique ou un sel de ceux-ci.
- un solvant organique polaire ayant une température d'ébullition à pression atmosphérique inférieure à 150 °C.
De préférence, ledit sol comprend un sel de lithium, un sel de cobalt, l'acide adipique ou un sel de celui-ci et un solvant organique polaire ayant une température d'ébullition à pression atmosphérique inférieure à 150°C. Ledit sol présente avantageusement une viscosité inférieure à 100 centipoises (0,1 Pa.s), de préférence inférieure à 50 centipoises (0,05 Pa.s), en particulier inférieure à 10 centipoises (0,01 Pa.s). Ledit sol permet la préparation de films d'oxyde de métaux de transition. Ces derniers présentent une bonne adhérence sur un substrat métallique et peuvent donc être avantageusement utilisé comme matériau d'électrode, par exemple dans des microbatteries. De préférence, le sol peut contenir un agent stabilisant. L'agent stabilisant peut être choisi parmi le groupe consistant en l'eau ou un acide carboxylique comprenant de 1 à 20 atomes de carbone ou un sel de celui-ci ou un mélange de ceux-ci. L'agent stabilisant est différent de l'agent chélatant. Ledit acide carboxylique est donc de préférence un monoacide, de préférence un monoacide aliphatique. L'acide carboxylique peut être l'acide méthanoïque, l'acide acétique, l'acide propanoïque, l'acide butanoïque, l'acide pentanoïque, l'acide hexanoïque, l'acide octanoïque, l'acide nonanoïque et l'acide décanoïque. En particulier, l'agent stabilisant peut être l'eau, l'acide acétique, l'acide propanoïque, l'acide butanoïque, l'acide pentanoïque. La proportion d'agent stabilisant dans le sol peut être comprise entre 0,1 et 30%, de préférence entre 1 et 20% de la quantité en poids du sol. En particulier, le sol selon la présente invention est homogène, c'est-à-dire, ne contient pas de particules en suspension ayant une dimension supérieure à 2 µm, avantageusement supérieure à 1 µm, de préférence supérieure à 0,5 µm, en particulier supérieure à 0,2 µm.

Alternativement, ledit sol comprend :
- un sel ou un hydroxyde de lithium ou de sodium, ou leur mélange,
- un sel ou un hydroxyde de cobalt, de nickel, de titane, de chrome ou de manganèse, ou leur mélange,
- un mélange d'acide adipique ou d'acide succinique ou un sel de ceux-ci ou un mélange de ceux-ci avec l'acide citrique ; la proportion d'acide citrique étant inférieure à 30% en mole sur base de la quantité totale en mole d'acide adipique et/ou d'acide succinique et d'acide citrique dans ledit sol,
- un solvant organique polaire ayant une température d'ébullition à pression atmosphérique inférieure à 150 °C.
Ledit sol présente avantageusement une viscosité inférieure à 100 centipoises (0,1 Pa.s), de préférence inférieure à 50 centipoises (0,05 Pa.s), en particulier inférieure à 10 centipoises (0,01 Pa.s). De préférence, ledit sol contient également un agent stabilisant tel que mentionné ci-dessus. La proportion d'agent stabilisant dans le sol peut être comprise 0,1 et 30%, de préférence entre 1 et 20% de la quantité en poids du sol. En particulier, le sol selon la présente invention peut être homogène, c'est-à-dire, ne pas présenter de particules en suspension, de préférence ne pas présenter de particules ayant une dimension supérieure à 2µm, avantageusement supérieure à 1 µm, de préférence supérieure à 0,5 µm, en particulier supérieure à 0,2 µm.

Comme mentionné ci-dessus, le film d'oxyde de métaux de transition tel que décrit peut être utilisé comme matériau d'électrode, de préférence comme matériau d'une électrode positive. Ladite électrode peut ainsi être utilisée dans une microbatterie. De préférence, le film d'oxyde de métaux de transition utilisé comme matériau d'électrode est obtenu par les étapes a) à c) ou a) à c") ou a) à d) du procédé selon la présente invention. Le film d'oxyde de métaux de transition tel que décrit peut être utilisé dans une pile à combustible. Le film d'oxyde de métaux de transition peut être utilisé comme matériau de protection de matériau d'électrode, de préférence dans des piles à combustibles. Ainsi, ledit film d'oxyde de métaux de transition peut être déposé sur tout ou partie de la surface d'une anode ou d'une cathode.

### Exemples

### Protocole général pour la préparation d'un film d'oxyde de métaux de transition selon la présente invention.

Une solution de départ est tout d'abord préparée. A cette fin, les précurseurs de métaux de transition sont mélangés puis la quantité de solvant nécessaire à la solubilisation des précurseurs est ajoutée. La quantité de solvant peut être augmentée pour ajuster la viscosité désirée de la solution. La solution est agitée pendant 1 heure à température, pression et atmosphère ambiantes (entre 20 et 25°C). Après 1 heure, l'agent stabilisant et l'agent chélatant sont ajoutés. Ces deux ajouts sont réalisés sous agitation et à température, pression et atmosphère ambiante. L'agitation est maintenue pendant 12 heures pour permettre la formation d'un sol.

### Préparation du film d'oxyde de métaux de transition à partir du sol préparé précédemment.

Le sol est pulvérisé sur un substrat, de préférence métallique, sous atmosphère ambiante. Le débit à la tête d'injection (Nordson, modèle EFD 781) du dispositif de pulvérisation est de 0,12 g à 0,16 g de solution par seconde (pour une solution ayant une viscosité inférieure à 0,1 Pa.s) et la vitesse de déplacement latéral de celle-ci est de 50 cm/s. La quantité de matière projetée sur le substrat peut dépendre de la concentration du sol ou des paramètres ci-dessus. De manière générale, des films de 0,1 à 0,2 µm d'épaisseur sont préparés à chaque passage. La multiplicité des passages peut être effectuée pour atteindre l'épaisseur désirée. Le film est séché sous vide à 60°C (1h), puis calciné sous air (atmosphère non contrôlée). Une fois l'épaisseur du film désirée atteinte, un recuit final est optionnellement réalisé.

### Procédure pour déterminer la rugosité.

La rugosité Ra des surfaces correspond à la moyenne arithmétique des valeurs absolues des écarts entre le profil et une ligne moyenne de ce profil, elle est exprimée en microns. Elle a été mesurée au moyen d'un profilomètre par contact de marque Dektak (fournisseur Bruker) dont le stylet présente un rayon de courbure de 12,5 microns.

### Procédure pour déterminer la viscosité

La viscosité exprimée en Pa.s ou centipoise est mesurée à l'aide d'un viscosimètre LVDVE de marque Brookfield.

### Procédure pour déterminer l'adhérence.

L'adhérence est mesurée après la mise en oeuvre dudit sol sous forme dudit film d'oxyde de métaux de transition. Ainsi, l'adhérence peut être mesurée après la mise en oeuvre de l'étape c') de dépôt d'une ou plusieurs couches, de préférence après ledit traitement thermique ; après la mise en oeuvre de l'étape c") de calcination ou après l'étape d) de recuit dudit film d'oxyde de métaux de transition. La mesure de l'adhérence est effectuée tout d'abord par simple inclinaison du substrat une fois recouvert par une ou plusieurs couches dudit sol (étape c'). Lesdites une ou plusieurs couches déposées sont considérées comme adhérant au substrat si elles ne se détériorent pas sous l'effet de l'inclinaison. Un test de frottement est alors effectué et consiste à passer le doigt ou un chiffon sec sur le substrat recouvert dudit film d'oxyde de métaux de transition, i.e. après calcination (étape c"). Une inspection visuelle du substrat revêtu permet d'évaluer la mesure de l'adhérence du revêtement. Un revêtement étant défini comme adhérant au substrat lorsqu'au moins une couche dudit film d'oxyde de métaux de transition restait sur le substrat.

### Procédure pour déterminer les performances électrochimiques des matériaux.

Les performances électrochimiques des matériaux sont évaluées par des mesures de cyclage en mode galvanostatique avec limitation de potentiel. La capacité massique du matériau est évaluée en intégrant le courant traversant le matériau durant chaque cycle de charge (ou de décharge) rapporté à la masse déposée.

### Procédure pour déterminer la pureté des matériaux

La pureté des matériaux peut être évaluée par diffraction des rayons X (DRX) et par voltampérométrie cyclique où le courant est mesuré en fonction d'incréments de potentiel.

### Procédure pour déterminer l'homogénéité d'une formulation telle qu'un sol

L'homogénéité d'une formulation telle qu'un sol est évaluée à l'oeil nu pour constater la présence ou l'absence d'une formulation transparente. La formulation est en outre filtrée sur un filtre de 0,2 micron (type Nylon acrodisc de marque PALL). Le filtrat est ainsi considéré comme homogène.

### Exemple 1 : Préparation d'un film de LiCoO₂ selon l'invention

La solution est préparée en mélangeant 2 g de CoAc₂.4H₂O (acétate de cobalt hydraté) et 0,53 g d'acétate de lithium sur lesquels 15 ml de méthanol sont ajoutés. La quantité de méthanol était suffisante pour permettre la solubilisation des sels de cobalt et de lithium. Ces derniers sont en quantité équimolaire. La solution est agitée pendant 1 heure à température ambiante (entre 20 et 25°C). Après 1 heure, 2 ml d'acide acétique concentré (96%) puis de 0,85 g d'acide adipique sont ajoutés. Ces deux ajouts sont réalisés sous agitation et à température ambiante. L'agitation est maintenue pendant 12 heures pour permettre la formation du sol. Le sol est déposé par pulvérisation sur un substrat métallique (SiO₂/TiO₂/Pt), porté à une température proche de 80°C. A chaque passage, un film d'une épaisseur de 0,1 à 0,2 µm est réalisé. Après 10 passages, le film possède une épaisseur de 1 à 2 µm. Tous les 10 passages, le film est séché sous vide à 60°C (1h), puis calciné sous air (atmosphère non contrôlée) pendant 15 minutes à 540°C. Une fois l'épaisseur du film désirée atteinte, un recuit final de 2h à la température de 540°C est réalisé. Le film de LiCoO₂ présente une bonne adhérence sur le substrat. La figure 1 représente la courbe de cyclage électrogalvanostatique d'un film de LiCoO₂ préparé selon l'exemple 1. Une capacité massique initiale de décharge de 112 mAh/g est calculée pour le premier cycle et de 99 mAh/g pour le cinquième cycle.

### Exemple 2 (invention)

L'exemple 1 est répété en substituant le méthanol (15 ml) par l'éthanol (25 ml). Le film de LiCoO₂ présente une bonne adhérence sur le substrat utilisé (SiO₂/TiO₂/Pt).

### Exemple 3 (invention)

L'exemple 1 est répété en substituant l'acide acétique par de l'eau (0,5 ml). Le substrat métallique est de l'acier. Une bonne adhérence du film de LiCoO₂ sur le substrat est observée.

### Exemple 4 (invention)

L'exemple 1 est répété sans ajouter d'agent stabilisant, i.e. sans ajout d'acide acétique. La quantité de solvant est fixée à 25 ml. Une bonne adhérence du film de LiCoO₂ sur le substrat (SiO₂/TiO₂/Pt) est observée.

### Exemple 5 (invention)

L'exemple 1 est répété sans ajouter d'agent stabilisant et en substituant 5 ou 10 % de l'acide adipique par une quantité équivalente d'acide citrique; par équivalence, il faut entendre ici une quantité molaire présentant un nombre identique de fonction acide. Le film de LiCoO₂ adhère correctement sur le substrat métallique (SiO₂/TiO₂/Pt).

### Exemple 6 (invention)

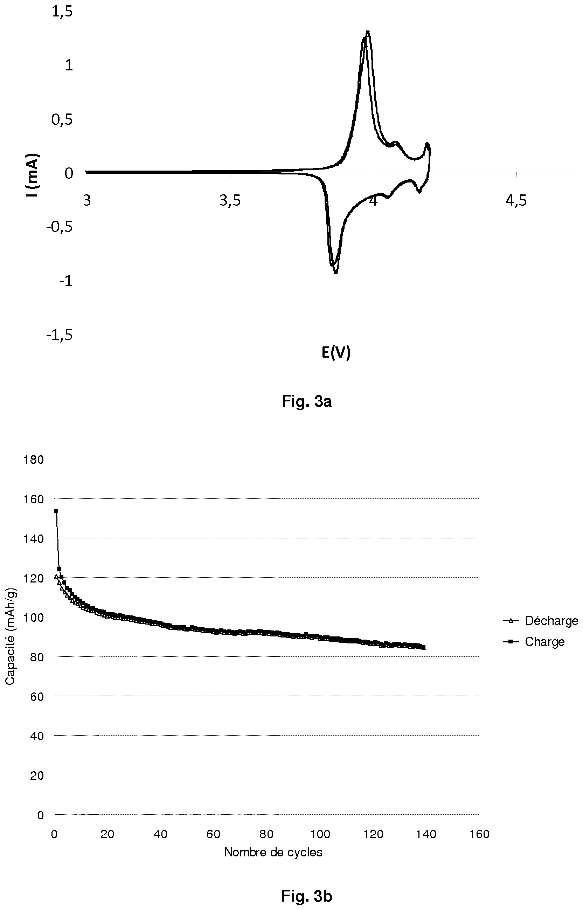

Une solution est préparée en mélangeant 4,68 g de Co(NO₃)₂.6H₂O (nitrate de cobalt hexahydrate) et 1,06 g d'acétate de lithium sur lesquels 50 ml d'éthanol sont ajoutés. Une fois la solution transparente, 4 ml d'acide acétique (agent stabilisant) et 1,7 g d'acide adipique (agent chélatant) sont ajoutés. Un substrat en acier est recouvert par spray coating de 72 couches de solution entrecoupées de plusieurs séquences de traitement thermiques puis est ensuite recuit pendant 6 h à 540°C pour former une électrode. Les performances électrochimiques des électrodes ainsi préparées sont illustrées aux figures 3a et 3b. Les figures 3a et 3b représentent respectivement un cyclage voltamétrique et une voltampérométrie cyclique du film de LiCoO₂ déposé sur l'électrode. Il démontre une bonne cristallisation du LiCoO₂. Le cyclage voltamétrique montre sans ambiguïté la présence de trois pics redox à 3,95V, 4,06V et 4,18V. La figure 3b indique le tracé des capacités de charge et décharge en fonction du nombre de cycles subis par l'électrode. De cette figure on peut déduire que la capacité spécifique d'insertion est de 80% de la capacité spécifique théorique (137 mA.h/g) après 5 cycles, de plus de 70% après 20 cycles et de 65% après 100 cycles.

### Exemple 7 (comparatif)

L'exemple 1 est répété en substituant l'acide adipique par l'acide acrylique (0,88 ml). Au cours du séchage, la rugosité du film augmente. Le film précipite sur l'électrode.

### Exemple 8 (comparatif)

Une solution est préparée en dispersant 0,53g d'acétate de lithium (LiAc) et 2g d'acétate de cobalt (Co(Ac)₂.4H₂O) dans 8ml d'eau. 1,1ml d'acide acrylique sont ajoutés ultérieurement. La quantité d'eau ajoutée est la quantité minimale nécessaire pour dissoudre les précurseurs et l'acide acrylique. La quantité d'acide acrylique est équimolaire par rapport à la quantité d'ions métalliques (Li + Co). La mouillabilité de la solution est mauvaise sur les substrats métalliques ; en particulier sur le platine. Les films sont d'épaisseur très irrégulière, avec une rugosité visible à l'oeil nu. Les films sont difficiles à sécher et des bulles apparaissent lors de la calcination. L'adhérence du film sur le substrat métallique est faible voire inexistante.

### Exemple 9 (comparatif)

L'exemple 8 est répété en remplaçant l'eau par l'éthylène glycol. La viscosité élevée de la solution, due à la viscosité de l'éthylène glycol ne facilite pas la technique de dépôt par spray ou pulvérisation. La mouillabilité de la solution sur le substrat est mauvaise. Il en résulte toujours des films inhomogènes d'épaisseur très variable. L'adhérence du film sur le substrat est mauvaise.

Le tableau 1 ci-dessous détaille les données et les résultats des exemples 1 à 9 tels que décrits ci-dessus. L'utilisation spécifique d'un agent chélatant selon la présente invention et d'un solvant organique polaire selon la présente invention permet la préparation de films minces d'oxyde de métaux de transition qui adhèrent suffisamment au substrat sur lequel lesdits films ont été déposés. Les exemples comparatifs démontrent que l'utilisation d'eau comme solvant des précurseurs ou d'acide acrylique comme agent chélatant diminue considérablement les capacités d'adhérence du film sur un substrat tel que le platine. La combinaison spécifique d'un agent chélatant et d'un solvant organique polaire telle que prévu selon la présente invention permet en outre de préparer des films d'oxyde de métaux de transition aptes à être utilisés comme matériaux d'électrode, plus particulièrement comme matériaux de cathode.

**Tableau 1 - Données relatives à la formation d'un film d'oxyde de métaux de transition et son adhésion sur un substrat**

| Ex. | Précurseurs | Solvant | Agent chélatant | Agent stabilisant | Substrat | Mouillabilité de la solution sur le substrat | Calcination (T°C) | Recuit (T°C) | Adhérence après calcination et recuit | Capacité massique (mAh/g) |
|---|---|---|---|---|---|---|---|---|---|---|
| 1 (Inv) | LiAc + Co(Ac)₂.4H₂O | CH₃OH | Acide adipique | Acide acétique | SiO₂/TiO₂/Pt | Bonne | 540 | 540 | Oui | 105-115 |
| 2 (Inv) | LiAc + Co(Ac)₂.4H₂O | C₂H₅OH | Acide adipique | Acide acétique | SiO₂/TiO₂/Pt | Bonne | 540 | 540 | Oui | - |
| 3 (Inv) | LiAc + Co(Ac)₂.4H₂O | CH₃OH | Acide adipique | H₂O | Acier | Bonne | 540 | 540 | Oui | > 105 |
| 4 (Inv) | LiAc + Co(Ac)₂.4H₂O | CH₃OH | Acide adipique | - | SiO₂/TiO₂/Pt | Bonne | 540 | 540 | Oui | 105-115 |
| 5 (Inv) | LiAc + Co(Ac)₂.4H₂O | CH₃OH | Acide citrique et adipique | - | SiO₂/TiO₂/Pt | Bonne | 540 | 540 | Oui | 105-115 |
| 6 (Inv) | LiAc + Co(NO₃)₂.6H₂O | C₂H₅OH | Acide adipique | Acide acétique | Acier | Bonne | 540 | 540 | Oui | >110 |
| 7 (comp) | LiAc + Co(Ac)₂.4H₂O | CH₃OH | Acide acrylique | Acide acétique | SiO₂/TiO₂/Pt | Bonne | 540 | 540 | Non | - |
| 8 (comp) | LiAc + Co(Ac)₂.4H₂O | H₂O | Acide acrylique | - | Mica/Pt | Faible | 540 | 540 | Non | - |
| 9 (comp) | LiAc + Co(Ac)₂.4H₂O | Ethylène glycol | Acide acrylique | - | Mica/Pt | Faible | 540 | 540 | Non | - |

### Exemple 10 (invention)

La solution est préparée en mélangeant 2 g de CoAc₂.4H₂O (acétate de cobalt hydraté) et 0,53 g d'acétate de lithium sur lesquels 15 ml de méthanol sont ajoutés. De l'acide adipique est utilisé comme agent chélatant (1,05 g) et de l'eau est utilisée comme stabilisant (0,5 ml) pour former un sol. A partir de celui-ci, un film de structure monocouche et deux films de structure multicouches comprenant respectivement trois et cinq couches sont réalisés. Un traitement thermique à 60°C sous vide est effectué après le dépôt de l'entièreté des couches correspondantes. La calcination est effectuée sur chacun des films à une température de 540°C pendant 15 min. Les films ainsi formés sont soumis à une étape de recuit effectuée à 400°C. Le tableau 2 détaille les caractéristiques de chacun des films obtenus après calcination et après recuit.

**Tableau 2**

| | | | |
|---|---|---|---|
| Nombre de couches | 1 | 3 | 5 |
| Adhérence après calcination | Oui | Oui | Oui |
| Epaisseur après calcination (µm) | 2,17 | 2,88 | 3,48 |
| Rugosité après calcination (nm) | 47 | 67 | 84 |
| Epaisseur après recuit (µm) | 1,23 | 1,48 | 1,87 |
| Rugosité après recuit (nm) | 195 | 340 | 669 |
| Adhérence après recuit | Oui | Oui | Oui |

### Exemple 11 (invention)

Une solution est préparée en mélangeant 6 g de CoAc₂.4H₂O et 1,574 g d'acétate de lithium dans 50ml de méthanol. Cette solution est agitée pendant 30 min. à température ambiante avant d'ajouter 5 ml d'acide acétique concentré (96%) puis 2,303 g d'acide succinique. L'agitation est maintenue pendant 5 heures. La solution est déposée par spray coating sur un disque d'acier de 13 mm de diamètre recouvert d'une mince couche de platine (100 nm) porté à une température proche de 80°C. Après 10 passages, le film est séché sous vide à 70°C puis calciné dans un four préchauffé à 540°C pendant 15 min. Dix nouvelles couches sont ensuite déposées sur le premier dépôt dans les mêmes conditions. Le film est à nouveau séché puis calciné dans les mêmes conditions. Un recuit est également appliqué au film (montée de 100° à 540°C en 30 minutes, 5h à 540°C puis diminution de 540°C à 100°C en 30 minutes). La quantité de matière active sur le disque est comprise entre 1,1 et 1,2 mg. La capacité en décharge de ce matériau est comprise entre 95 et 100 mAh/g pour le premier cycle et supérieure à 90 mAh/g pour le dixième.

### Exemple 12 (Invention)

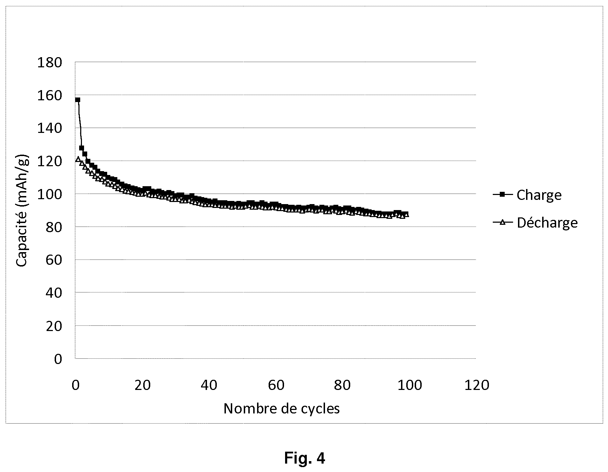

Une solution est préparée en mélangeant 6 g de CoAc₂.4H₂O (acétate de cobalt) et 1,57 g d'acétate de lithium sur lesquels 50 ml de méthanol sont ajoutés. Après dissolution des réactifs, 5 ml d'acide acétique (agent stabilisant) et 2,85 g d'acide adipique (agent chélatant) sont ajoutés. Le film est formé par déposition de 30 couches de solution sur un disque de platine recuit à 540°C pendant 6 heures. La performance électrochimique des électrodes ainsi préparées est illustrée à la figure 4. La figure 4 représente le tracé des capacités de charge et décharge en fonction du nombre de cycles subis par l'électrode. De cette figure on peut déduire que la capacité spécifique d'insertion est de 73% de la capacité spécifique théorique (137 mAh/g) après 20 cycles et de 65% après 100 cycles.

### Exemple 13 : Préparation d'un film de Li₄Mn₅O₁₂ selon l'invention

Une solution est préparée en dissolvant 1g d'acétate de lithium et 4,67g de nitrate de manganèse (Mn(NO₃)₂.4H₂O) dans 25ml d'éthanol. Une fois la dissolution des sels complète, 3 ml d'acide acétique (96%) et 2,24g d'acide adipique sont ajoutés. La calcination des électrodes est réalisée à 400°C. Le recuit final est également effectué à 400 °C pendant 10h. Les films sont réalisés sur électrodes d'acier inoxydable de 16mm de diamètre, par déposition successive de plusieurs couches de précurseurs par spray-coating. La figure 5 représente une voltampérométrie cyclique d'un film de Li₄Mn₅O₁₂ préparé selon le présent exemple et démontre la pureté de la matière active. Les performances électrochimiques mesurées à un régime de C/10 sont présentées dans le tableau 3. Ce tableau montre une capacité massique de plus de 90% de la capacité massique théorique après 30 cycles.

**Tableau 3**

| Nb de couches | Poids Li₄Mn₅O₁₂ | C_{déch1} (mAh/g) | C_{déch10} (mAh/g) | C_{déch30} (mAh/g) | C_{déch100} (mAh/g) |
|---|---|---|---|---|---|
| 10 | 0,82 mg | 178 | 168 | 154 | |
| 20 | 1,44 mg | 180 | 167 | 156 | 143 |
| 40 | 3,34 mg | 175 | 165 | 160 | |

Le procédé selon la présente invention permet de préparer également un film mince de métaux de transition de structure multicouche. Ce film présente aussi une forte adhérence au substrat métallique et une faible rugosité à sa surface.

Les termes et descriptions utilisés ici sont proposés à titre d'illustration seulement et ne constituent pas des limitations. L'homme du métier reconnaîtra que de nombreuses variations sont possibles dans la portée de l'invention telle que décrite dans les revendications qui suivent ; dans celles-ci, tous les termes doivent être compris dans leur acception la plus large à moins que cela ne soit indiqué autrement.

## Revendications

1. Procédé pour la fabrication de films d'oxyde de métaux de transition de formule AₐM_{b}O_{d} dans laquelle A est un métal alcalin, avantageusement A est choisi parmi le groupe consistant en Li, Na et K, ou leur mélange ;
M est un métal ou un mélange de métaux choisi parmi les métaux de transition, de préférence M est un métal ou un mélange de métaux de transition choisi parmi les éléments des colonnes 3 à 12 du tableau périodique, avantageusement M est choisi parmi le groupe consistant en Co, Ni, Mn, Fe, Cu, Ti, Cr, V et Zn, et leurs mélanges ;
O est l'oxygène,
a, b et d sont des nombres réels supérieurs à 0 et sont choisis de manière à assurer l'électroneutralité ; ledit procédé comprenant les étapes suivantes :
a) préparation d'une solution comprenant un ou plusieurs, de préférence deux ou plus que deux, précurseurs contenant un ou plusieurs des éléments A, M et O, un agent chélatant et un solvant organique polaire ayant une température d'ébullition à pression atmosphérique inférieure à 150°C, dans lequel l'agent chélatant est choisi parmi les acides dicarboxyliques aliphatiques comprenant de 2 à 20 atomes de carbone, les sels ou les mélanges de ceux-ci, ou l'agent chélatant est un mélange entre au moins un diacide carboxylique tel que défini ci-dessus et au moins un acide tricarboxylique aliphatique comprenant de 2 à 20 atomes de carbone, les sels ou les mélanges de ceux-ci, la proportion dudit au moins un acide tricarboxylique étant inférieure à 30% en mole sur base de la quantité totale en mole dudit au moins un acide dicarboxylique et dudit au moins un acide tricarboxylique dans ladite solution ;
b) maintien de ladite solution sous agitation pour former un sol,
c) mise en oeuvre du sol sous forme dudit film d'oxyde de métaux de transition ;
**caractérisé en ce que**, l'étape c) comprend les étapes suivantes :
c') dépôt d'une ou plusieurs couches dudit sol sur un substrat et
c") calcination desdites une ou plusieurs couches formées à l'étape c') pour préparer ledit film d'oxyde de métaux de transition.

2. Procédé selon la revendication 1 **caractérisé en ce que** ladite solution préparée à l'étape a) comprenant également un agent stabilisant choisi parmi le groupe consistant en l'eau ou un acide carboxylique comprenant de 1 à 20 atomes de carbone ou un sel de celui-ci ou un mélange de ceux-ci, l'agent stabilisant étant différent de l'agent chélatant.

3. Procédé selon l'une quelconque des revendications précédentes **caractérisé en ce que** ledit film d'oxyde de métaux de transition préparé est de formule AₐM_{b}O_{d} dans laquelle A est Li; M est choisi parmi le groupe consistant en Co, Ni, Mn, Fe, Cu, Ti, Cr, V et Zn; O est l'oxygène ; a, b et d sont des nombres réels supérieurs à 0 et choisis de manière à assurer l'électroneutralité.

4. Procédé selon l'une quelconque des revendications précédentes **caractérisé en ce que** le sol formé à l'étape b) a une viscosité inférieure à 0,1 Pa.s.

5. Procédé selon l'une quelconque des revendications précédentes **caractérisé en ce que** l'agent chélatant est choisi parmi les diacides carboxyliques aliphatiques comprenant de 2 à 10 atomes de carbone, leurs sels ou leurs mélanges.

6. Procédé selon l'une quelconque des revendications précédentes **caractérisé en ce que** le solvant est choisi parmi le méthanol, éthanol, propan-1-ol, isopropanol, butanol, pentanol, acétone, butanone, tétrahydrofurane, dimethylformamide, acétonitrile, éther diéthylique, dichlorométhane, 2-methoxyethanol et l'acétate d'éthyle.

7. Procédé selon l'une quelconque des revendications précédentes **caractérisé en ce que** lesdits un ou plusieurs, de préférence deux ou plus que deux, précurseurs de l'étape a) sont sélectionnés parmi le groupe consistant en les sels ou les hydroxydes de lithium, sodium, potassium, cobalt, nickel, manganèse, fer, cuivre, titane, chrome, vanadium et zinc, et leurs mélanges.

8. Procédé selon l'une quelconque des revendications précédentes **caractérisé en ce que** lesdits un ou plusieurs, de préférence deux ou plus que deux, précurseurs de l'étape a) comprennent un premier précurseur choisi parmi les sels ou les hydroxydes de lithium ou de sodium, et un second précurseur choisi parmi les sels ou les hydroxydes de cobalt, de nickel, de titane, de chrome ou de manganèse.

9. Procédé selon l'une quelconque des revendications précédentes **caractérisé en ce que** l'agent chélatant est choisi parmi l'acide oxalique, l'acide succinique, l'acide adipique ou les sels de ceux-ci ou leur mélange.

10. Procédé selon l'une quelconque des revendications précédentes **caractérisé en ce que** ledit film d'oxyde de métaux de transition a une épaisseur moyenne comprise entre 0,01 µm et 250 µm.

11. Procédé selon l'une quelconque des revendications précédentes **caractérisé en ce que** ledit film d'oxyde de métaux de transition a une structure mono ou multicouche, chaque couche ayant une épaisseur comprise entre 0,01 et 2,5 µm.

12. Procédé selon l'une quelconque des revendications précédentes **caractérisé en ce que** ledit substrat comprend du carbone, du platine, de l'or, de l'inox, du platine sur silice, de l'ITO, du platine sur une tranche de silice ou des alliages métalliques comprenant au moins deux des éléments sélectionnés parmi le nickel, le chrome et le fer.

13. Procédé selon l'une quelconque des revendications précédentes **caractérisé en ce que** le substrat présente une rugosité Ra inférieure à 500 nm.

14. Procédé selon l'une quelconque des revendications précédentes caractérisé en ce l'étape c') est réalisée par spin coating, dip coating, spray coating, slide coating, screen printing, inkjet printing ou roll coating.

15. Procédé selon l'une quelconque des revendications précédentes **caractérisé en ce qu'**un traitement thermique est effectué à une température inférieure à 250°C pour sécher lesdites couches déposées à l'étape c') avant l'étape c") de calcination.

16. Procédé selon l'une quelconque des revendications précédentes **caractérisé en ce que** l'étape de calcination c") est effectuée à une température comprise 350 et 800°C.

17. Procédé selon l'une quelconque des revendications précédentes **caractérisé en ce que** le film d'oxyde de métaux de transition préparé est choisi parmi le groupe consistant en LiCoO₂, LiMnO₂, LiNi_{0.5}Mn_{1.5}O₄, LiCr_{0.5}Mn_{1.5}O₄, LiCo_{0.5}Mn_{1.5}O₄, LiCoMnO₄, LiNi_{0.5}Mn_{0.5}O₂, LiNi_{1/3}Mn_{1/3}Co_{1/3}O_{2 3}, LiNi_{0.8}Co_{0.2}O₂, LiNi_{0.5}Mn_{1.5-z}Ti_{z}O₄ où z est un nombre entre 0 et 1,5, LiMn₂O₄, LiNiO₂, Li₄Mn₅O₁₂, et Li₄Ti₅O₁₂, de préférence LiNiO₂, Li₄Mn₅O₁₂, LiMn₂O₄, LiMnO₂, LiCoO₂ et Li₄Ti₅O₁₂.

18. Sol comprenant un ou plusieurs, de préférence deux ou plus que deux, précurseurs contenant un ou plusieurs des éléments A, M et O tels que définis à la revendication 1, un solvant organique polaire ayant une température d'ébullition à pression atmosphérique inférieure à 150°C, et un agent chélatant, **caractérisé en ce que**, l'agent chélatant est choisi parmi :
• les acides dicarboxyliques aliphatiques comprenant de 2 à 20 atomes de carbone, les sels ou les mélanges de ceux-ci, ou
• un mélange entre au moins un acide dicarboxylique et au moins un acide tricarboxylique ou les sels de ceux-ci, lesdits acides di- ou tricarboxyliques étant des acides aliphatiques comprenant de 2 à 20 atomes de carbone, la proportion dudit au moins un acide tricarboxylique étant inférieure à 30% en mole sur base de la quantité totale en mole dudit au moins un acide dicarboxylique et dudit au moins un acide tricarboxylique dans le sol,
et **en ce que**, le sol ne contient pas de particules ayant une dimension supérieure à 2 µm.

19. Sol selon la revendication [[20]] 18 comprenant un agent stabilisant choisi parmi le groupe consistant en l'eau ou un acide carboxylique comprenant de 1 à 20 atomes de carbone ou un sel de celui-ci ou un mélange de ceux-ci, l'agent stabilisant étant différent de l'agent chélatant.

20. Sol selon la revendication précédente dans lequel l'agent stabilisant est choisi parmi l'eau, l'acide acétique, l'acide propanoïque, l'acide butanoïque ou l'acide pentanoïque.

21. Sol selon l'une quelconque des revendications 19 ou 20 dans lequel la proportion d'agent stabilisant dans le sol peut être comprise entre 0,1 et 30%, de préférence entre 1 et 20% de la quantité en poids du sol.

22. Sol selon l'une quelconque des revendications 18 à 21 dans lequel lesdits deux ou plus que deux précurseurs sont choisis parmi un sel ou un hydroxyde de lithium, sodium, potassium, cobalt, nickel, manganèse, fer, cuivre, titane, chrome, vanadium, zinc, et leurs mélanges ; et l'agent chélatant est un mélange entre l'acide adipique ou succinique les sels ou les mélanges de ceux-ci et l'acide citrique ou sel de celui-ci.

23. Sol selon l'une quelconque des revendications 18 à 22 **caractérisé en ce qu'**il a une viscosité inférieure à 0,1 Pa.s.

## Patentansprüche

1. Verfahren zur Herstellung von Übergangsmetalloxidschichten der Formel AₐM_{b}O_{d}, in der A ein Alkalimetall ist, wobei A vorteilhafterweise in der Gruppe ausgewählt ist, die aus Li, Na und K oder ihrem Gemisch besteht;
wobei M ein Metall oder ein Gemisch von Metallen ist, die unter den Übergangsmetallen ausgewählt sind, wobei M vorzugsweise ein Metall oder ein Gemisch von Übergangsmetallen ist, die unter den Elementen der Säulen 3 bis 12 des Periodenverzeichnisses ausgewählt sind, wobei M vorteilhafterweise in der Gruppe ausgewählt ist, bestehend aus Co, Ni, Mn, Fe, Cu, Ti, Cr, V und Zn und ihren Gemischen;
wobei O Sauerstoff ist;
wobei a, b und d reale Zahlen über 0 sind und ausgewählt sind, um die Elektroneutralität zu gewährleisten;
wobei das Verfahren die folgenden Schritte umfasst:
a) Herstellen einer Lösung, umfassend eine oder mehrere, vorzugsweise zwei oder mehr als zwei, Vorstufen, die ein oder mehrere der Elemente A, M und O enthalten, einen Chelatbildner und ein polares organisches Lösungsmittel mit einer Siedetemperatur bei Luftdruck unter 150 °C, wobei der Chelatbildner unter den aliphatischen Dicarboxylsäuren, umfassend 2 bis 20 Kohlenstoffatome, den Salzen oder Gemischen derselben ausgewählt ist, oder wobei der Chelatbildner ein Gemisch aus mindestens einer Dicarboxylsäure, wie oben definiert, und mindestens einer aliphatischen Tricarboxylsäure, umfassend 2 bis 20 Kohlenstoffatome, den Salzen oder Gemischen derselben ist, wobei der Anteil der mindestens einen Tricarboxylsäure niedriger als 30 Mol-% auf Basis der Gesamtmolmenge der mindestens einen Dicarboxylsäure und der mindestens einen Tricarboxylsäure in der Lösung ist;
b) Rühren der Lösung, um einen Sol zu bilden,
c) Einsatz des Sols in Form der Übergangsmetalloxidschicht;
**dadurch gekennzeichnet, dass** der Schritt c) die folgenden Schritte umfasst:
c') Aufbringen einer oder mehrerer Schichten des Sols auf ein Substrat und
c") Kalzinieren der einen oder mehreren Schichten, die in Schritt c') gebildet wurden, um die Übergangsmetalloxidschicht herzustellen.

2. Verfahren nach Anspruch 1, **dadurch gekennzeichnet, dass** die in Schritt a) hergestellte Lösung auch einen Stabilisator umfasst, der in der Gruppe ausgewählt ist, die aus Wasser oder einer Carboxylsäure, umfassend ein 1 bis 20 Kohlenstoffatome, oder einem Salz derselben oder einem Gemisch derselben besteht, wobei sich der Stabilisator von dem Chelatbildner unterscheidet.

3. Verfahren nach einem der vorhergehenden Ansprüche, **dadurch gekennzeichnet, dass** die hergestellte Übergangsmetalloxidschicht die Formel AₐM_{b}O_{d} hat, in der A Li ist; M in der Gruppe ausgewählt ist, die aus Co, Ni, Mn, Fe, Cu, Ti, Cr, V und Zn besteht; O Sauerstoff ist; a, b und d reale Zahlen über 0 sind und ausgewählt sind, um die Elektroneutralität zu gewährleisten.

4. Verfahren nach einem der vorhergehenden Ansprüche, **dadurch gekennzeichnet, dass** der in Schritt b) gebildete Sol eine Viskosität unter 0,1 Pa.s hat.

5. Verfahren nach einem der vorhergehenden Ansprüche, **dadurch gekennzeichnet, dass** der Chelatbildner unter den aliphatischen Dicarboxylsäuren, umfassend 2 bis 10 Kohlenstoffatome, ihren Salzen oder ihren Gemischen ausgewählt ist.

6. Verfahren nach einem der vorhergehenden Ansprüche, **dadurch gekennzeichnet, dass** das Lösungsmittel unter Methanol, Ethanol, Propan-1-ol, Isopropanol, Butanol, Pentanol, Azeton, Butanon, Tetrahydrofuran, Dimethylformamid, Azetonitril, Diethylether, Dichlormethan, 2-Methoxyethanol und Ethylazetat ausgewählt ist.

7. Verfahren nach einem der vorhergehenden Ansprüche, **dadurch gekennzeichnet, dass** die eine oder mehreren, vorzugsweise zwei oder mehr als zwei, Vorstufen aus Schritt a) in der Gruppe ausgewählt sind, bestehend in den Salzen oder Hydroxiden von Lithium, Natrium, Kalium, Kobalt, Nickel, Mangan, Eisen, Kupfer, Titan, Chrom, Vanadium und Zink und ihren Gemischen.

8. Verfahren nach einem der vorhergehenden Ansprüchen, **dadurch gekennzeichnet, dass** die eine oder mehreren, vorzugsweise zwei oder mehr als zwei, Vorstufen aus Schritt a) eine oder mehrere Vorstufen, die unter den Salzen oder Hydroxiden von Lithium oder Natrium ausgewählt sind, und eine zweite Vorstufe umfassen, die unter den Salzen oder Hydroxiden von Kobalt, Nickel, Titan, Chrom oder Mangan ausgewählt ist.

9. Verfahren nach einem der vorhergehenden Ansprüche, **dadurch gekennzeichnet, dass** der Chelatbildner unter der Oxalsäure, der Bernsteinsäure, der Adipinsäure und den Salzen derselben oder ihrem Gemisch ausgewählt ist.

10. Verfahren nach einem der vorhergehenden Ansprüche, **dadurch gekennzeichnet, dass** die Übergangsmetalloxidschicht eine durchschnittliche Dicke zwischen 0,01 µm und 250 µm aufweist.

11. Verfahren nach einem der vorhergehenden Ansprüche, **dadurch gekennzeichnet, dass** die Übergangsmetalloxidschicht eine ein- oder mehrschichtige Struktur hat, wobei jede Schicht eine Dicke zwischen 0,01 und 2,5 µm aufweist.

12. Verfahren nach einem der vorhergehenden Ansprüche, **dadurch gekennzeichnet, dass** das Substrat Kohlenstoff, Platin, Gold, Inox, Platin auf Siliziumoxid, ITO, Platin auf einem Kieselsäurewafer oder Metalllegierungen, umfassend mindestens zwei der unter Nickel, Chrom und Eisen ausgewählten Elemente, umfasst.

13. Verfahren nach einem der vorhergehenden Ansprüche, **dadurch gekennzeichnet, dass** das Substrat eine Rauigkeit Ra unter 500 nm aufweist.

14. Verfahren nach einem der vorhergehenden Ansprüche, **dadurch gekennzeichnet, dass** der Schritt c') durch spin coating, dip coating, spray coating, slide coating, screen printing, inkjet printing oder roll coating durchgeführt wird.

15. Verfahren nach einem der vorhergehenden Ansprüche, **dadurch gekennzeichnet, dass** eine Wärmebehandlung bei einer Temperatur unter 250 °C durchgeführt wird, um die in Schritt c') aufgebrachten Schichten vor dem Kalzinierungsschritt c") zu trocknen.

16. Verfahren nach einem der vorhergehenden Ansprüche, **dadurch gekennzeichnet, dass** der Kalzinierungsschritt c") bei einer Temperatur zwischen 350 und 800 °C durchgeführt wird.

17. Verfahren nach einem der vorhergehenden Ansprüche, **dadurch gekennzeichnet, dass** die hergestellte Übergangsmetalloxidschicht in der Gruppe ausgewählt ist, bestehend aus LiCoO₂, LiMnO₂, LiNi_{0,5}Mn_{1,5}O₄, LiCr_{0,5}Mn_{1,5}O₄, LiCo_{0,5}Mn_{1,5}O₄, LiCoMnO₄, LiNi_{0,5}Mn_{0,5}O₂, LiNi_{1/3}Mn_{1/3}Co_{1/3}O₂₃, LiNi_{0,8}Co_{0,2}O₂, LiNi_{0,5}Mn_{1,5-z}Ti_{z}O₄, wobei z eine Zahl zwischen 0 und 1,5 ist, LiMn₂O₄, LiNiO₂, Li₄Mn₅O₁₂ und Li₄Ti₅O₁₂, vorzugsweise LiNiO₂, Li₄Mn₅O₁₂, LiMn₂O₄, LiMnO₂, LiCoO₂ und Li₄Ti₅O₁₂.

18. Sol, umfassend eine oder mehrere, vorzugsweise zwei oder mehr als zwei, Vorstufen, die ein oder mehrere der Elemente A, M und O enthalten, wie in Anspruch 1 definiert, ein polares organisches Lösungsmittel mit einer Siedetemperatur bei Luftdruck unter 150 °C und einen Chelatbildner, **dadurch gekennzeichnet, dass** der Chelatbildner ausgewählt ist unter:
* den aliphatischen Dicarboxylsäuren, umfassend 2 bis 20 Kohlenstoffatome, den Salzen oder Gemischen derselben ausgewählt ist,
* einem Gemisch aus mindestens einer Dicarboxylsäure und den Salzen derselben, wobei die Di- oder Tricarboxylsäuren aliphatische Säuren sind, umfassend 2 bis 20 Kohlenstoffatome, wobei der Anteil der mindestens einen Tricarboxylsäure niedriger als 30 Mol-% auf Basis der Gesamtmolmenge der mindestens einen Dicarboxylsäure und der mindestens einen Tricarboxylsäure im Sol ist,
und dass der Sol keine Partikel enthält, die eine Dimension über 2 µm aufweisen.

19. Sol nach Anspruch 18, umfassend einen Stabilisator, der in der Gruppe ausgewählt ist, bestehend aus Wasser oder einer Carboxylsäure mit 1 bis 20 Kohlenstoffatomen oder einem Salz derselben oder einem Gemisch derselben, wobei sich der Stabilisator von dem Chelatbildner unterscheidet.

20. Sol nach dem vorhergehenden Anspruch, bei dem der Stabilisator unter Wasser, Essigsäure, Propansäure, Butansäure oder Pentansäure ausgewählt ist.

21. Sol nach einem der Ansprüche 19 oder 20, bei dem der Anteil von Stabilisator im Sol zwischen 0,1 und 30 %, vorzugsweise zwischen 1 und 20 % der Gewichtsmenge des Sols ausmachen kann.

22. Sol nach einem der Ansprüche 18 bis 21, bei dem die zwei oder mehr als zwei Vorstufen unter einem Salz oder einem Hydroxid von Lithium, Natrium, Kalium, Kobalt, Nickel, Mangan, Eisen, Kupfer, Titan, Chrom, Vanadium, Zink und ihren Gemischen ausgewählt sind; und der Chelatbildner ein Gemisch unter der Adipinsäure oder Bernsteinsäure, den Salzen oder Gemischen derselben und Zitronensäure oder dem Salz derselben ist.

23. Sol nach einem der Ansprüche 18 bis 22, **dadurch gekennzeichnet, dass** er eine Viskosität unter 0,1 Pa.s aufweist.

## Claims

1. Method for manufacturing transition metal oxide films of formula AₐM_{b}O_{d}, in which:
A is an alkali metal, A advantageously being chosen from the group consisting of Li, Na and K, or their mixtures;
M is a metal or a mixture of metals chosen from the transition metals, M preferably being a transition metal or a mixture of transition metals chosen from the elements of columns 3 to 12 of the periodic table, M advantageously being chosen from the group consisting of Co, Ni, Mn, Fe, Cu, Ti, Cr, V and Zn, and their mixtures;
O is oxygen; and
a, b and d are real numbers higher than 0 and are chosen so as to ensure electroneutrality, said method comprising the following steps:
a) preparing a solution comprising one or more, preferably two or more than two, precursors containing one or more of the elements A, M and O, a chelating agent and a polar organic solvent having a boiling point at atmospheric pressure below 150°C, wherein the chelating agent is chosen from aliphatic dicarboxylic acids comprising 2 to 20 carbon atoms and salts or mixtures thereof, or the chelating agent is a mixture between at least one carboxylic diacid such as defined above and at least one aliphatic tricarboxylic acid comprising 2 to 20 carbon atoms and salts or mixtures thereof, the proportion of said at least one tricarboxylic acid being lower than 30 mol% relative to the total molar amount of said at least one dicarboxylic acid and said at least one tricarboxylic acid in said solution ;
b) forming a sol by stirring said solution; and
c) processing the sol in the form of said transition metal oxide film,
**characterised in that** step c) comprises the following steps:
c') depositing one or more layers of said sol on a substrate; and
c") preparing said transition metal oxide film by calcinating said one or more layers formed in step c').

2. Method according to Claim 1, **characterised in that** said solution prepared in step a) also comprises a stabilising agent chosen from the group consisting of water or a carboxylic acid comprising 1 to 20 carbon atoms or a salt of said acid or a mixture thereof, the stabilising agent being different from the chelating agent.

3. Method according to any one of the preceding claims, **characterised in that** said transition metal oxide film prepared is of formula AₐM_{b}O_{d}, in which: A is Li; M is chosen from the group consisting of Co, Ni, Mn, Fe, Cu, Ti, Cr, V and Zn; O is oxygen; and a, b and d are real numbers higher than 0 and chosen so as to ensure electroneutrality.

4. Method according to any one of the preceding claims, **characterised in that** the sol formed in step b) has a viscosity lower than 0.1 Pa.s.

5. Method according to any one of the preceding claims, **characterised in that** the chelating agent is chosen from aliphatic carboxylic diacids comprising 2 to 10 carbon atoms, their salts or their mixtures.

6. Method according to any one of the preceding claims, **characterised in that** the solvent is chosen from methanol, ethanol, propan-1-ol, isopropanol, butanol, pentanol, acetone, butanone, tetrahydrofuran, dimethylformamide, acetonitrile, diethyl ether, dichloromethane, 2-methoxyethanol and ethyl acetate.

7. Method according to any one of the preceding claims, **characterised in that** said one or more, preferably two or more than two, precursors of step a) are selected from the group consisting of salts or hydroxides of lithium, sodium, potassium, cobalt, nickel, manganese, iron, copper, titanium, chromium, vanadium and zinc and their mixtures.

8. Method according to any one of the preceding claims, **characterised in that** said one or more, preferably two or more than two, precursors of step a) comprise a first precursor chosen from salts or hydroxides of lithium or sodium, and a second precursor chosen from salts or hydroxides of cobalt, nickel, titanium, chromium or manganese.

9. Method according to any one of the preceding claims, **characterised in that** the chelating agent is chosen from oxalic acid, succinic acid, adipic acid or salts thereof or their mixtures.

10. Method according to any one of the preceding claims, **characterised in that** said transition metal oxide film has an average thickness comprised between 0.01 µm and 250 µm.

11. Method according to any one of the preceding claims, **characterised in that** said transition metal oxide film has a monolayer or multilayer structure, each layer having a thickness comprised between 0.01 and 2.5 µm.

12. Method according to any one of the preceding claims, **characterised in that** said substrate comprises carbon, platinum, gold, stainless steel, platinum on silica, ITO, platinum on a silica wafer or metal alloys comprising at least two elements selected from nickel, chromium and iron.

13. Method according to any one of the preceding claims, **characterised in that** the substrate has an Ra roughness lower than 500 nm.

14. Method according to any one of the preceding claims, **characterised in that** step c') is carried out by spin coating, dip coating, spray coating, slide coating, screen printing, inject printing or roll coating.

15. Method according to any one of the preceding claims, **characterised in that** a heat treatment is carried out at a temperature below 250°C in order to dry said layers deposited in step c'), before the calcinating step c").

16. Method according to any one of the preceding claims, **characterised in that** the calcinating step c") is carried out at a temperature comprised between 350 and 800°C.

17. Method according to any one of the preceding claims, **characterised in that** the transition metal oxide film thus prepared is chosen from the group consisting of LiCoO₂, LiMnO₂, LiNi_{0.5}Mn_{1.5}O₄, LiCr_{0.5}Mn_{1.5}O₄, LiCo_{0.5}Mn_{1.5}O₄, LiCoMnO₄, LiNi_{0.5}Mn_{0.5}O₂, LiNi_{1/3}Mn_{1/3}Co_{1/3}O_{2 3}, LiNi_{0.8}Co_{0.2}O₂, LiNi_{0.5}Mn_{1.5-z}Ti_{z}O₄, where z is a number between 0 and 1.5, LiMn₂O₄, LiNiO₂, Li₄Mn₅O₁₂, and Li₄Ti₅O₁₂, preferably LiNiO₂, Li₄Mn₅O₁₂, LiMn₂O₄, LiMnO₂, LiCoO₂ and Li₄Ti₅O₁₂.

18. Sol comprising one or more, preferably two or more than two, precursors containing one or more of the elements A, M and O such as defined in Claim 1, a polar organic solvent having a boiling point at atmospheric pressure below 150°C, and a chelating agent, **characterised in that** the chelating agent is chosen from:
• aliphatic dicarboxylic acids comprising 2 to 20 carbon atoms, salts or mixtures thereof, or
• a mixture between at least one dicarboxylic acid and at least one tricarboxylic acid or salts thereof, said di- or tricarboxylic acids being aliphatic acids comprising 2 to 20 carbon atoms, the proportion of said at least one tricarboxylic acid being lower than 30 mol% relative to the total molar amount of said at least one dicarboxylic acid and said at least one tricarboxylic acid in the sol,
and **characterised in that** the sol does not contain particles that are larger than 2 µm in size.

19. Sol according to Claim 18, comprising a stabilising agent chosen from the group consisting of water or a carboxylic acid comprising 1 to 20 carbon atoms or a salt of said acid or a mixture thereof, the stabilising agent being different from the chelating agent.

20. Sol according to the preceding claim, in which the stabilising agent is chosen from water, acetic acid, propanoic acid, butanoic acid or pentanoic acid.

21. Sol according to any one of Claims 19 and 20, in which the proportion of stabilising agent in the sol may be comprised between 0.1 and 30% and preferably between 1 and 20% of the amount of sol by weight.

22. Sol according to any one of Claims 18 to 21, in which said two or more than two precursors are chosen from a salt or hydroxide of lithium, sodium, potassium, cobalt, nickel, manganese, iron, copper, titanium, chromium, vanadium, zinc and their mixtures; and the chelating agent is a mixture of succinic or adipic acid, the salts or mixtures thereof and the citric acid or salt thereof.

23. Sol according to any one of Claims 18 to 22, **characterised in that** it has a viscosity lower than 0.1 Pa.s.
